# EUROPÄISCHE PATENTANMELDUNG

(11) **EP 1 391 839 A2**
(43) Veröffentlichungstag der Anmeldung: **25.02.2004**
(21) Anmeldenummer: 03018831.2
(22) Anmeldetag: 19.08.2003
(51) Int. Cl.: G06F 17/60

(54) **Verfahren und System zur Annahme, Aufbewahrung, Ausgabe und Überbringung von Gegenständen**

(30) Priorität: 21.08.2002 DE 10239212
(71) Anmelder: Bredhauer, Ronny G., 65388 Schlangenbad (DE)
(72) Erfinder: Bredhauer, Ronny G., 65388 Schlangenbad (DE)
(74) Vertreter: Richter, Werdermann, Gerbaulet & Hofmann

(57) **Zusammenfassung**

Um ein Verfahren sowie ein System (100) zur Annahme, Aufbewahrung, Ausgabe und Überbringung mindestens eines Gegenstands (G), insbesondere mindestens eines Schlüssels, zu schaffen, bei denen mindestens eine erste Person (A) die Möglichkeit hat, den Gegenstand (G) zur Aufbewahrung abzugeben, ohne dass an der Annahme- und Aufbewahrungsstelle (10; 10') die persönlichen Daten (Dₚ) der Person (A) bekannt werden, wird vorgeschlagen, dass
- die erste Person (A) den Gegenstand (G) in der Annahmestelle (10) unter Registrierung mindestens eines von der Annahmestelle (10) ausgegebenen und dem Gegenstand (G) zugeordneten Annahme- und Ausgabe-Codes (12) abgibt;
- die erste Person (A) gegenüber mindestens einer Zentrale (16) mindestens einen Identifikations-Code (14), gegebenenfalls gleichzeitig mit dem Abgeben des Gegenstands (G), abgibt,
- wobei der Gegenstand (G) von der Aufbewahrungs- und Ausgabestelle (10') übernommen und aufbewahrt wird,
- wobei der Annahme- und Ausgabe-Code (12) und der Identifikations-Code (14) an die Zentrale (16) durch mindestens ein Übertragungsmittel (22) zugeführt werden können und
- wobei der Annahme- und Ausgabe-Code (12) und der Identifikations-Code (14) in der Zentrale (16) zusammengeführt werden;
- die Freigabe des Gegenstands (G) durch die Zentrale (16) nach Kontaktaufnahme der ersten Person (A) über mindestens eine Kommunikationsanlage (18) nur dann erfolgt, wenn der zu nennende Identifikations-Code (14) mit dem der Zentrale (16) zugeführten Identifikations-Code (14) bei mindestens einem Vergleich übereinstimmt;
- daraufhin der Annahme- und Ausgabe-Code (12) von der Zentrale (16) über die Kommunikationsanlage (18) an die Aufbewahrungs- und Ausgabestelle (10') übermittelt wird.

## Beschreibung

### Technisches Gebiet

Die vorliegende Erfindung betrifft ein Verfahren sowie ein System zur Annahme, Aufbewahrung, Ausgabe und Überbringung von Gegenständen.

### Stand der Technik

Es ist bekannt, dass der zunehmende Einsatz elektronischer Einrichtungen und existierender Kommunikationsanlagen zu neuen Möglichkeiten bei Verbrauchern führt, bequem Gegenstände des täglichen Lebens an einen bestimmten Ort zu ordern und an diesem oder einem anderen gewünschten Ort zu empfangen.

Beispielsweise existieren Systeme zur Vermietung von Kraftfahrzeugen, die etwa über eine Telekommunikationsanlage und über eine Kommunikationsanlage bei einer Zentrale bestellt werden und anschließend an der Adresse des Bestellers oder an einer anderen gewünschten Adresse zur Verfügung gestellt werden. Es besteht dabei auch die Möglichkeit, das bestellte Kraftfahrzeug an der Adresse abzuholen, bei der es zuvor über die Telekommunikationsanlage bestellt worden ist.

Hierbei bevorratet ein Unternehmen eine Vielzahl von Kraftfahrzeugen, die nach Bedarf zu einem beliebigen Zeitpunkt abgerufen werden oder auch ausgeliefert werden. Dabei handelt es sich hier jedoch um Gegenstände, die unabhängig von einer bestimmten Person bevorratet und durch das System nach bestimmten Kriterien ausgegeben werden. Ein Mietwagen wird beispielsweise nach bestimmten Kriterien nach Anforderung eines Kunden an diesen ausgegeben.

Es existieren aber auch bekannte Systeme, bei denen Personen an einer bestimmten Stelle bestimmte, nur ihnen zugeordnete Gegenstände abgeben bzw. hinterlegen, die sie zu einem bestimmten Zeitpunkt wieder abrufen können. So ist es zum Beispiel bekannt, einer Spedition Waren zu übergeben, sei es durch Abholung der Spedition oder durch eigene Anlieferung.

Die Spedition wird auf Wunsch der Person die Waren so lange lagern, bis die Person die Auslieferung an einen bestimmten Ort wünscht. Dieser Ort kann unter Umständen auch der Ort sein, an dem die Ware ihren Ausgangspunkt hatte. Im allgemeinen ist dabei jedoch nachteilig, dass die Waren zumeist nicht anonym aufbewahrt werden und dass ein Abruf nicht zu jedem Zeitpunkt möglich ist.

In der Regel werden die Gegenstände zudem mit den persönlichen Daten desjenigen versehen, der die Gegenstände oder Waren zur Aufbewahrung aufgibt. Deshalb ist ein derartiges bekanntes System für Gegenstände, die von besonderem Wert sind, aufgrund der Kopplung der persönlichen Eigentümerdaten mit den aufgegebenen/aufbewahrten Gegenständen nicht ausreichend vor Missbrauch geschützt.

In der Druckschrift JP 2002189797 A ist ein Verfahren zur Annahme, Aufbewahrung, Ausgabe und Überbringung von Gegenständen offenbart. Gemäß diesem bekannten Verfahren gibt eine Person mindestens einen Gegenstand in einer Annahmestelle ab; der Gegenstand wird in eine Aufbewahrungs- und Ausgabestelle übergeben und durch eine Zentrale wieder freigegeben, falls der genannte Identifikationscode mit dem in der Zentrale gespeicherten Identifikationscode übereinstimmt. Hierbei nimmt die Person über eine Kommunikationsanlage Kontakt mit der Zentrale auf, und die Zentrale übermittelt über die Kommunikationsanlage den Identifikationscode an die Aufbewahrungs- und Ausgabestelle, um den Gegenstand freizugeben.

Allerdings wird in der Druckschrift JP 2002189797 A nicht zwischen verschiedenen Codes, zum Beispiel zwischen einem Annahme-/Ausgabe-Code und einem Identifikations-Code, unterschieden; vielmehr ist in der Druckschrift JP 2002189797 A nur die Existenz eines einzigen Codes in Form einer ID offenbart.

In der Druckschrift DE 100 34 727 A1 ist ein Verfahren offenbart, das der Auslieferung von Waren dient. Gemäß diesem bekannten Verfahren wird von einer Auslieferungssteuereinheit ein Bestellungsidentifizierungscode ausgegeben und registriert; ein Bestelleridentifizierungscode wird gegenüber der Auslieferungssteuereinheit abgegeben.

Allerdings fallen in der Druckschrift DE 100 34 727 A1 die Annahmestelle und die Zentrale in Form der Auslieferungssteuereinheit räumlich zusammen, so dass beispielsweise Wertgegenstände nicht anonym angenommen werden können.

In der Druckschrift DE 100 40 752 A1 ist ein Verfahren zur sicheren Lagerung und Auslieferung von Waren offenbart.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren sowie ein System der eingangs genannten Art zu schaffen, bei denen mindestens eine Person die Möglichkeit hat, mindestens einen Gegenstand zur Aufbewahrung abzugeben, ohne dass an der Annahmeund Aufbewahrungsstelle die persönlichen Daten der Person bekannt werden; darüber hinaus soll genau dieser Gegenstand zu einem beliebigen Zeitpunkt nur an diese Person oder an eine von dieser Person bevollmächtigte Person unter Nutzung des für einen Abruf geeigneten Systems wieder ausgegeben oder ausgeliefert werden.

Diese Aufgabe wird durch ein Verfahren mit den im Anspruch 1 angegebenen Merkmalen sowie durch ein System mit den im Anspruch 7 angegebenen Merkmalen gelöst.

Das Verfahren gemäß der vorliegenden Erfindung sowie das System gemäß der vorliegenden Erfindung bieten den Vorteil, dass mindestens eine erste Person mindestens einen Gegenstand in mindestens einer Annahmestelle unter Registrierung mindestens eines von der Annahmestelle ausgegebenen und dem Gegenstand zugeordneten Annahme- und Ausgabe-Codes abgibt und gegenüber mindestens einer Zentrale, insbesondere gegenüber mindestens einer Sicherheitszentrale, mindestens einen Identifikations-Code, gegebenenfalls gleichzeitig mit dem Abgeben des Gegenstands, abgibt, wobei der Gegenstand von mindestens einer Aufbewahrungs- und Ausgabestelle übernommen und aufbewahrt wird.

Der Annahme- und Ausgabe-Code und der Identifikations-Code können an die Zentrale durch mindestens ein Übertragungsmittel zugeführt werden, und der der Annahme- und Ausgabe-Code und der Identifikations-Code werden in der Zentrale zusammengeführt.

Die Freigabe des Gegenstands ausschließlich durch die Zentrale erfolgt nach Kontaktaufnahme der ersten Person über mindestens eine Kommunikationsanlage nur dann, wenn mindestens ein Vergleich des zu nennenden Identifikations-Codes mit dem der Zentrale zugeführten Identifikations-Code ein übereinstimmendes Ergebnis liefert, woraufhin der dem Gegenstand zugeordnete Annahme- und Ausgabe-Code von der Zentrale über die Kommunikationsanlage an die Aufbewahrungs- und Ausgabestelle übermittelt werden.

Auf diese Weise ist einfach und sicher eine Aufbewahrung und Ausgabe von Gegenständen an eine ganz bestimmte Person an einem vorher bestimmten Ort möglich, wobei der hohe Grad an Sicherheit allein schon durch die Trennung von Lagerung des Gegenstands und Verwaltung der Daten gewährleistet ist.

Auch ist der gesamte Anmelde- und Hinterlegungsprozeß vollständig anonymisiert, wodurch es selbst für Mitarbeiter(innen) des Systems unmöglich ist, den hinterlegten Gegenstand einer bestimmten Adresse oder einer bestimmten Person zuzuordnen; dies kann nur die hinterlegende Person selbst.

Gemäß einer besonders vorteilhaften Weiterbildung der vorliegenden Erfindung kann zusätzlich zur, insbesondere vor, während oder nach der, Übermittlung des Annahme- und Ausgabe-Codes von der Zentrale an die Aufbewahrungs- und Ausgabestelle mindestens ein Übergabecode, insbesondere mindestens ein Übergabepasswort, von der Zentrale, zum Beispiel über die Kommunikationsanlage, an die erste Person sowie an die Aufbewahrungs- und Ausgabestelle beispielsweise telephonisch übermittelt werden.

Dieser Übergabecode, der in erster Linie der Kontrolle bei der Aushändigung bzw. Übergabe des Gegenstands dient, kann bei der Freischaltung von der Zentrale vergeben und sowohl der ersten Person als auch der Aufbewahrungs- und Ausgabestelle benannt werden.

Durch die Vergabe dieses auch als Übergabepasswort oder "zweites Passwort" bezeichenbares Übergabecodes an die erste Person kann diese erste Person ihren auch als "erstes Passwort" bezeichenbaren Identifikations-Code, der ausschließlich der ersten Person bekannt ist, über mehrere Freischaltungen hinweg behalten.

Dieses "erste Passwort" oder persönliche Passwort bestimmt die erste Person selbst; das "erste Passwort" ist unter anderem Voraussetzung für die Identifikation bei der Zentrale und damit für die zu einem späteren Zeitpunkt gewünschte Freischaltung des Gegenstands erforderlich.

Indem in vorteilhafter Weise die Annahmestelle sowie die Aufbewahrungsund Ausgabestelle an einem Ort angeordnet sind, ist die Durchführung des vorliegenden Verfahrens sowie die Realisierung des vorliegenden Systems besonders einfach möglich. Die Annahmestelle kann jedoch auch getrennt von der Aufbewahrungs- und Ausgabestelle eingerichtet werden.

In einer bevorzugten Ausgestaltung der Erfindung entsteht an der Aufbewahrungs- und Ausgabestelle ein Depot, in dem Gegenstände unter Registrierung des bestimmten Annahme- und Ausgabecodes eingeordnet werden.

Gemäß einer besonders erfinderischen Weiterbildung des vorliegenden Verfahrens wie auch des vorliegenden Systems kann der Gegenstand in mindestens ein Aufbewahrungsbehältnis, insbesondere in mindestens ein versiegelbares Etui, eingelegt und in diesem Aufbewahrungsbehältnis aufbewahrt werden. Dieses zum Beispiel im wesentlichen transparente Aufbewahrungsbehältnis schützt den Gegenstand vor unbefugter Duplizierung.

Um eine systematische und platzsparende Einlagerung des Gegenstands, zum Beispiel in mindestens einem speziellen Depotschrank, insbesondere Schlüsselschrank, zu gewährleisten, kann der Annahme- und Ausgabe-Code in zweckmäßiger Weise dem Aufbewahrungsbehältnis zugeordnet, insbesondere auf das Aufbewahrungsbehältnis aufgedruckt, sein.

In bevorzugter Ausgestaltung der vorliegenden Erfindung wird der Annahme- und Ausgabe-Code aus einer Zahlenkombination beliebiger Länge und/oder aus einer Buchstabenkombination beliebiger Länge gebildet.

Die Annahme des Gegenstands erfolgt hierbei in bevorzugter Weise in Annahmestellen, beispielsweise in Geschäften oder in Tankstellen, wobei in der Annahmestelle der Annahme- und Ausgabe-Code für den Gegenstand vergeben wird.

Der Identifikations-Code wird vorzugsweise ebenfalls aus einer Zahlenkombination beliebiger Länge und/oder aus einer Buchstabenkombination beliebiger Länge gebildet.

Der Identifikations-Code kann
- mindestens einen persönlichen Code und/oder persönliche Daten aufweisen oder
- aus mindestens einem persönlichen Code und/oder aus persönlichen Daten bestehen.
Der persönliche Code und die persönlichen Daten - also der Identifikations-Code - sind nur der Zentrale bekannt, denn dieser wird nur der Zentrale zugeführt.

Als persönliche Daten werden vorzugsweise
- mindestens ein Name und/oder
- mindestens eine Anschrift und/oder
- mindestens eine Telephonnummer und/oder
- mindestens ein Geburtsdatum und/oder
- mindestens ein Geburtsort und/oder
- mindestens ein Übergabeort und/oder
- mindestens ein Wunschpasswort (sogenanntes "erstes Passwort") hinterlegt. Alternativ oder in Ergänzung hierzu können auch die Daten mindestens einer weiteren bevollmächtigten Person hinterlegt werden.

Der persönliche Code wird in bevorzugter Ausgestaltung der vorliegenden Erfindung ebenfalls aus einer Zahlenkombination beliebiger Länge und/oder aus einer Buchstabenkombination beliebiger Länge gebildet.

Als wesentlicher Bestandteil der vorliegenden Erfindung ist in das Verfahren wie auch in das System mindestens eine Kommunikationsanlage integriert, mit der die erste Person Kontakt aufnehmen kann. Als Mittel zur Kontaktaufnahme mit der Zentrale und mit ihrer Kommunikationsanlage dient vorzugsweise mindestens ein Telekommunikationssystem.

In bevorzugter Ausgestaltung der vorliegenden Erfindung ist es durch die Kommunikationsanlage in der Zentrale möglich, den Gegenstand nach Angabe des mindestens einen Identifikations-Codes, gegebenenfalls durch die erste Person, bei der Aufbewahrungs- und Ausgabestelle zur Abholung freizugeben bzw. eine Auslieferung zu veranlassen, nachdem die Zentrale den Annahme- und Ausgabe-Code an die Aufbewahrungsund Ausgabestelle übermittelt hat.

In bevorzugter Ausgestaltung der vorliegenden Erfindung ist auch eine Auslieferung an einen von der Ausgabestelle verschiedenen Ort dann möglich, wenn der Identifikations-Code auch
- persönliche Daten, insbesondere die Adresse der ersten Person, aufweist oder
- aus persönlichen Daten, insbesondere aus der Adresse der ersten Person, besteht.

Es ist auch möglich, eine andere (Liefer-)Anschrift vorzugeben.

Auch ist es möglich, dass die erste Person der Zentrale eine andere Anschrift, beispielsweise die Anschrift einer Gaststätte, eines Nachbarn, einer Tankstelle oder dergleichen, zusammen mit dem Identifikations-Code mitteilt, so dass die Auslieferung an diese andere Anschrift erfolgen kann.

In alternativer oder weiterer bevorzugter Ausgestaltung der vorliegenden Erfindung ist es möglich, die Kommunikationsanlage mit mindestens einer datenverarbeitenden Anlage, vorzugsweise mit mindestens einer Datenbank, zu koppeln, in der der persönliche Code und/oder die persönlichen Daten als Identifikations-Code gespeichert werden.

Die datenverarbeitende Anlage kann in zweckmäßiger Weise verschiedene Zugangsmöglichkeiten oder besondere Zugangsrechte aufweisen, die zudem vorzugsweise mit mindestens einem speziellen Zugangscode gesichert sind. Zu diesen Zugangsmöglichkeiten gehört der Zugang per Telephon, per P[ersonal]C[omputer] über Internet und dergleichen.

In bevorzugter Weise wird hierbei der ersten Person im Vorfeld der Zugangscode zur Verfügung gestellt, wobei der Zugangscode gemeinsam mit dem Identifikations-Code die Zugangsberechtigung zur Kommunikationsanlage bzw. zu deren Datenbank ermöglicht.

In vorteilhafter Weise werden dadurch Gegenstände, insbesondere Wertgegenstände, sowohl mithilfe des vorliegenden Verfahrens als auch mithilfe des vorliegenden Systems an geeigneten Annahmestellen anonym und diskret angenommen und in den Aufbewahrungs- und Ausgabestellen sicher aufbewahrt und ausgegeben.

Besonders geeignet ist dieses Verfahren bzw. dieses System für Gegenstände, die von der ersten Person vergessen, verlegt oder verloren werden können und die für die erste Person von besonderem Wert sind, wie etwa Autoschlüssel, Hausschlüssel, Wohnungsschlüssel oder dergleichen (ohne Schlüssel vor der eigenen verschlossenen Tür zu stehen, stellt in jedem Falle eine äußerst unangenehme Situation dar).

Da der Verlust derartiger Gegenstände zumeist zu einem sofortigen Handlungszwang führt, können derartige Gegenstände mittels des vorliegenden Verfahrens wie auch mittels des vorliegenden Systems aufbewahrt und zu jeder Tages- und Nachtzeit als aufbewahrtes Duplikat, zum Beispiel als deponierter Ersatzschlüssel, an jedem gewünschten Ort ohne zusätzliche Kosten zur Verfügung gestellt, ersetzt und/oder abgeholt werden.

Es ist von besonderem Vorteil, dass derartige Gegenstände, zum Beispiel in Form eines Zweitschlüssels, nicht Freunden, Nachbarn, Verwandten oder anderen Hausbewohnern zur Aufbewahrung übergeben werden müssen, die gegebenenfalls zum Zeitpunkt, an dem eine Bereitstellung des Gegenstands notwendig ist, gar nicht erreichbar sind.

Außerdem werden durch die erfindungsgemäß anonyme Art der Aufbewahrung verschiedenste Probleme vermieden: Es kann bei einem unbefugten Eindringen in eine Wohnung oder in dergleichen eine Verdächtigung von schlüsselaufbewahrenden Freunden, Nachbarn, Verwandten oder anderen Hausbewohnern vermieden werden. Auch entstehen keine Probleme mit Versicherungen.

In vorteilhafter Weise können im Falle einer derartigen Aufbewahrung des Gegenstands, insbesondere des Schlüssels, Kosten für einen hinzuzuziehenden, zumeist überaus teuren und üblicherweise ein denkbar schlechtes Image genießenden Schlüssel(not)dienst (<--> Austausch der Schließanlage häufig erforderlich) sowie Beschädigungen durch gewaltsames Öffnen einer Türe oder dergleichen vermieden werden.

Zudem ist die Aufbewahrung in der aufbewahrenden Stelle des Gegenstands durch die Angabe des Identifikations-Codes nur gegenüber der Zentrale absolut sicher gegen Missbrauch durch den Aufbewahrer geschützt, denn der Identifikations-Code liegt in der Aufbewahrungs- und Ausgabestelle nicht vor, und nur dieser Identifikations-Code enthält die persönlichen Daten der ersten Person.

Weitere bevorzugte Ausgestaltungen der vorliegenden Erfindung ergeben sich aus den in den Unteransprüchen genannten Merkmalen, wobei beim Verfahren gemäß der vorliegenden Erfindung wie auch beim System gemäß der vorliegenden Erfindung in erfindungswesentlicher Weise als bevorzugte Ausführungsform(en) bzw. zweckmäßige Weiterbildung(en) jeweils für sich genommen und/oder in Kombination miteinander vorgesehen sein kann,
- dass zusätzlich zur Übermittlung des Annahme- und Ausgabe-Codes von der Zentrale an die Aufbewahrungs- und Ausgabestelle mindestens ein Übergabecode, insbesondere mindestens ein Übergabepasswort, von der Zentrale an die erste Person sowie an die Aufbewahrungs- und Ausgabestelle übermittelt wird;
- dass die Übermittlung des Übergabecodes vor, während oder nach der Übermittlung des Annahme- und Ausgabe-Codes erfolgt;
- dass der Übergabecode über die Kommunikationsanlage übermittelt wird;
- dass der Gegenstand in mindestens einem Aufbewahrungsbehältnis, insbesondere in mindestens einem versiegelbaren Etui, aufbewahrt wird;
- dass der Annahme- und Ausgabe-Code dem Aufbewahrungsbehältnis zugeordnet, insbesondere auf das Aufbewahrungsbehältnis aufgedruckt, wird;
- dass sich die Annahmestelle und die Aufbewahrungs- und Ausgabestelle an mindestens einem gemeinsamen Ort befinden;
- dass sich die Annahmestelle und die Aufbewahrungs- und Ausgabestelle an verschiedenen Orten befinden;
- dass der Annahme- und Ausgabe-Code
   -- aus mindestens einer Zahlenkombination und/oder
   -- aus mindestens einer Buchstabenkombination und/oder
   -- aus mindestens einer alphanumerischen Kombination beliebiger Länge gebildet wird;
- dass als Annahme- und Ausgabe-Code mindestens ein Einlieferungsdatum und/oder mindestens eine fortlaufende Nummer verwendet wird;
- dass der Identifikations-Code
   -- aus mindestens einer Zahlenkombination und/oder
   -- aus mindestens einer Buchstabenkombination und/oder
   -- aus mindestens einer alphanumerischen Kombination beliebiger Länge gebildet wird;
- dass der Identifikations-Code
   -- aus persönlichen Daten und/oder
   -- aus mindestens einem persönlichen Code gebildet wird;
- dass die persönlichen Daten
   -- mindestens ein Name und/oder
   -- mindestens eine Anschrift und/oder
   -- mindestens eine Telephonnummer und/oder
   -- mindestens ein Geburtsdatum und/oder
   -- mindestens ein Geburtsort und/oder
   -- mindestens ein Übergabeort und/oder
   -- mindestens ein Wunschpasswort (sogenanntes "erstes Passwort") sind;
- dass der persönliche Code
   -- aus mindestens einer Zahlenkombination und/oder
   -- aus mindestens einer Buchstabenkombination und/oder
   -- aus mindestens einer alphanumerischen Kombination beliebiger Länge gebildet wird;
- dass die Zuführung des Annahme- und Ausgabe-Codes und des Identifikations-Codes an die Zentrale durch mindestens ein Übertragungsmittel erfolgt;
- dass der Gegenstand in der Aufbewahrungs- und Ausgabestelle an die erste Person nach Nennung des persönlichen Codes durch die erste Person ausgegeben wird;
- dass, wenn die persönlichen Daten oder mindestens eine Zusatzinformation an die Aufbewahrungs- und Ausgabestelle übermittelt werden, der Gegenstand durch mindestens eine zweite Person an die erste Person an die in den persönlichen Daten übermittelte Adresse oder an mindestens einen in der Zusatzinformation übermittelten Aufenthaltsort unter Nennung des persönlichen Codes und/oder unter Nachweis der persönlichen Daten ausgegeben und/oder ausgeliefert wird;
- dass als Kommunikationsanlage mindestens ein Telekommunikationssystem verwendet wird;
- dass als Kommunikationsanlage mindestens eine datenverarbeitende Anlage verwendet wird;
- dass die datenverarbeitende Anlage mindestens eine Datenbank verwaltet;
- dass die Datenbank
   -- den Annahme- und Ausgabe-Code,
   -- den Identifikations-Code und
   -- gegebenenfalls die Zusatzinformation verwaltet;
- dass die Datenbank mit mindestens einem Sicherheitssystem ausgerüstet wird;
- dass die Datenbank über mindestens einen Zugangscode und über den Identifikations-Code direkt die Ausgabe des Gegenstands freigibt;
- dass als Annahmestelle und/oder als Aufbewahrungs- und Ausgabestelle mindestens ein Geschäft verwendet wird;
- dass als Annahmestelle mindestens eine Tankstelle verwendet wird;
- dass als Annahmestelle mindestens ein speziell ausgebildeter Automat verwendet wird;
- dass der Gegenstand mindestens ein Schlüssel ist.

Die vorliegende Erfindung betrifft schließlich die Verwendung eines Verfahrens gemäß der vorstehend dargelegten Art und/oder mindestens eines Systems gemäß der vorstehend dargelegten Art beim Annehmen, Aufbewahren, Ausgeben und Überbringen mindestens eines Gegenstands, insbesondere mindestens eines Schlüssels.

### Kurze Beschreibung der Zeichnungen

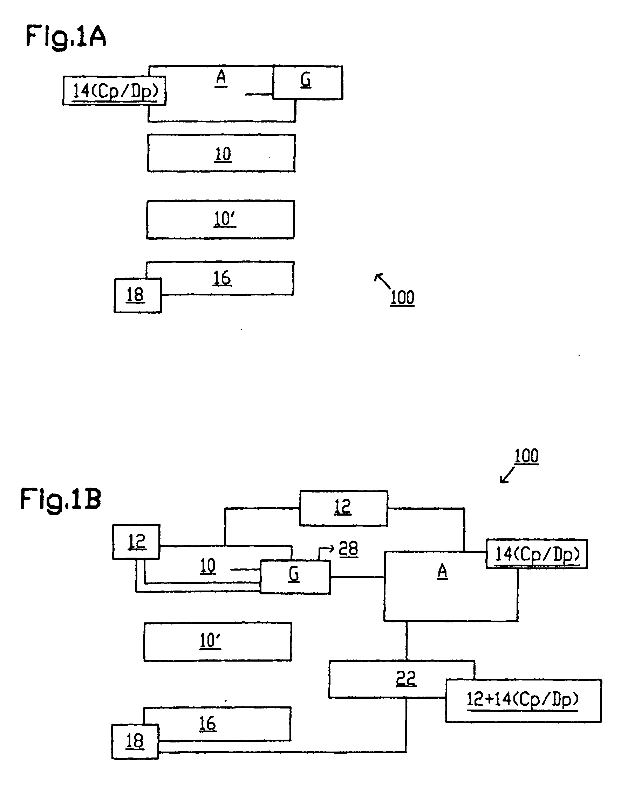

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 7 nachgeordneten Ansprüche verwiesen, andererseits werden weitere Ausgestaltungen, Merkmale und Vorteile der vorliegenden Erfindung nachstehend anhand des durch die Figuren 1A bis 1H veranschaulichten Ausführungsbeispiels näher erläutert.

### Es zeigt:

Fig. 1A in schematischer Blockdarstellung die Ausgangssituation des Systems gemäß der vorliegenden Erfindung, das in den Fig. 1A bis 1H nach dem Verfahren gemäß der vorliegenden Erfindung arbeitet;
Fig. 1B in schematischer Blockdarstellung eine Annahme eines Gegenstands in einer Annahmestelle des Systems aus Fig. 1A;
Fig. 1C in schematischer Blockdarstellung eine Weitergabe des Gegenstands an eine Aufbewahrungs- und Ausgabestelle des Systems aus Fig. 1A und 1B;

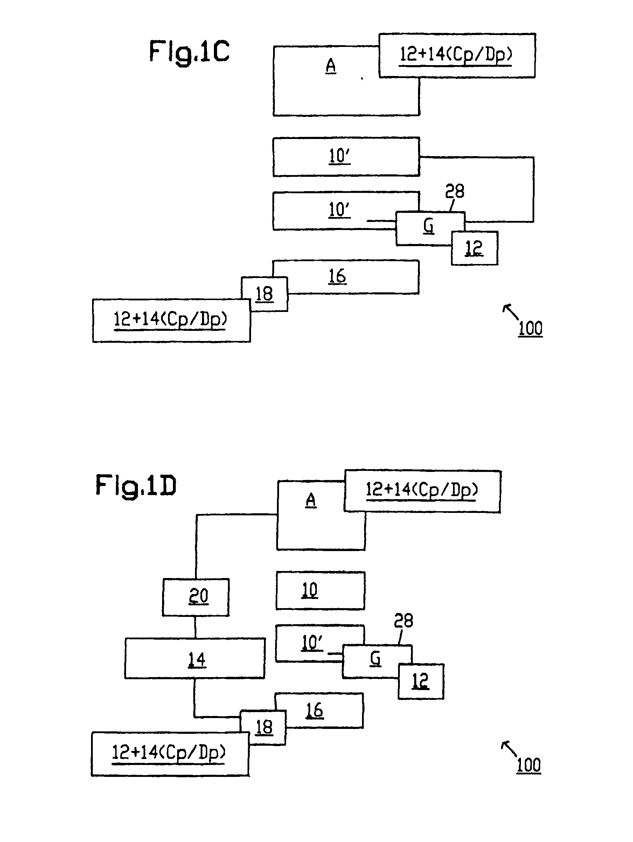

Fig. 1D in schematischer Blockdarstellung eine Anforderung des Gegenstands bei einer Zentrale des Systems aus Fig. 1A, 1B und 1C;

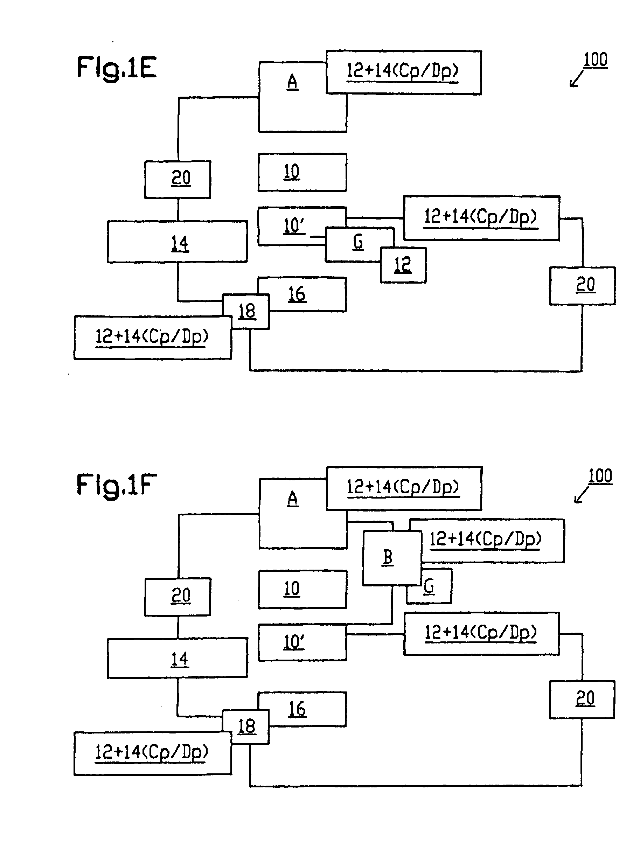

Fig. 1E in schematischer Blockdarstellung eine Ausgabefreigabe des Gegenstands durch die Zentrale bei der Aufbewahrungs- und Ausgabestelle des Systems aus Fig. 1A, 1B, 1C und 1D;
Fig. 1F in schematischer Blockdarstellung eine Ausgabe des Gegenstands durch die Aufbewahrungs- und Ausgabestelle des Systems aus Fig. 1A, 1B, 1C und 1D;

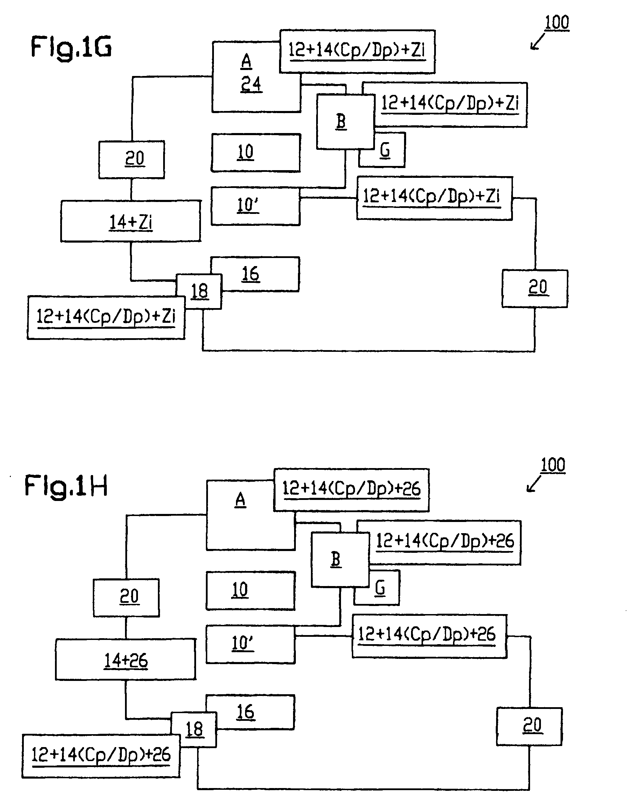

Fig. 1G in schematischer Blockdarstellung eine Auslieferung des Gegenstands durch die Aufbewahrungs- und Ausgabestelle des Systems aus Fig. 1A, 1B, 1C und 1D; und
Fig. 1H eine Auslieferung des Gegenstands durch die Aufbewahrungs- und Ausgabestelle des Systems aus Fig. 1A, 1B, 1C und 1D unter gleichzeitigem Einsatz eines speziellen Übergabepassworts.
Gleiche oder ähnliche Ausgestaltungen, Elemente oder Merkmale sind in den Figuren 1A bis 1H mit identischen Bezugszeichen versehen.

### Bester Weg zur Ausführung der Erfindung

Figur 1A zeigt in einem Blockschaltbild die Ausgangsposition des zum Annehmen, Aufbewahren, Ausgeben und Überbringen eines Gegenstands G bestimmten Systems 100 (sogenanntes Sicherheitssystem "Keyport"), das in den Figuren 1A bis 1H nach dem Verfahren gemäß der vorliegenden Erfindung arbeitet.

Dabei stellen überlagerte Blöcke oder Felder in den Figuren 1A bis 1H eine Kopplung von im System 100 bzw. im Verfahren beteiligten Bestandteilen oder Komponenten dar. Sind in den Figuren 1A bis 1H gestrichelte Linien dargestellt, handelt es sich um Informationen, wobei diese Informationen einer bestimmten Person oder einem bestimmten Ort oder einem Gegenstand oder einem bestimmten Übertragungsmittel bzw. Datenträger zugeordnet sind. Zur Verdeutlichung sind derartige Informationen in den Figuren 1A bis 1H dann im Vordergrund am oder beim jeweiligen Träger der Informationen dargestellt.

Eine erste Person A ist Träger eines Identifikations-Codes 14, der aus einem persönlichen Code Cₚ und persönlichen Daten Dₚ besteht. Die erste Person A besitzt einen Gegenstand G.

Die persönlichen Daten Dₚ der ersten Person A sind beispielsweise ein Name und/oder eine Anschrift und/oder eine Telephonnummer und/oder ein Geburtsdatum und/oder ein Geburtsort und/oder ein Übergabeort und/oder ein Wunschpasswort (sogenanntes "erstes Passwort") für einen Gegenstand und/oder die persönlichen Daten einer bevollmächtigten Person, die (auch) zum späteren Empfang des Gegenstands G berechtigt sein soll.

Für die persönlichen Daten Dₚ eignen sich insbesondere Angaben, durch die sich die erste Person A zur Identifizierung ausweisen kann. Der ersten Person A steht das System 100 zur Verfügung, das eine Annahmestelle 10, eine Aufbewahrungs- und Ausgabestelle 10', eine Zentrale 16 und eine Kommunikationsanlage 18 aufweist.

Vorzugsweise sind die Annahmestelle 10 und die Aufbewahrungs- und Ausgabestelle 10' an einem gemeinsamen Ort angeordnet. Für eine gemeinsame Anordnung der Annahmestelle 10 und der Aufbewahrungs- und Ausgabestelle 10' eignen sich vor allem Geschäfte und dergleichen.

Die Annahmestelle 10 kann jedoch auch an einem anderen Ort angeordnet werden. Dazu eignen sich besonders Tankstellen, denn das heutzutage relativ dichte Netz an Tankstellen mit Betrieb rund um die Uhr (= sogenannter "24 Stunden-Betrieb") stellt eine ideale Ausgangsbasis für das System 100 gemäß der vorliegenden Erfindung dar.

Durch vergleichsweise geringfügige Aufrüstungsmaßnahmen an diesen Tankstellen in Verbindung mit der Installation der Sicherheitszentrale 16 mit integriertem 24 Stunden-Callcenter kann die durch das System 100 implementierte außergewöhnliche Dienstleistung kostengünstig angeboten werden.

Alternativ oder in Ergänzung hierzu bieten sich auch Automaten an, die als Annahmestelle(n) 10 für den Gegenstand G genutzt werden können. Derartige Automaten sind so ausgebildet, dass sie den Gegenstand G einem Annahme- und Ausgabe-Code 12 zuordnen und mit der Zentrale 16 über eine Kommunikationsanlage 18 kommunizieren. Es kann vorteilhafterweise vorgesehen werden, dass über den Automaten gleichzeitig der Identifikations-Code 14 eingegeben werden kann.

Figur 1A zeigt ferner diese Kommunikationsanlage 18, auf die jeder Teilnehmer zugreift, der das System 100 sowie das dem System 100 zugrunde liegende Verfahren nutzt. Auf die Kommunikationsanlage 18 wird nachstehend noch näher eingegangen.

Figur 1 B zeigt ebenfalls in der Form eines Blockschaltbilds einen ersten Schritt des Verfahrens gemäß der vorliegenden Erfindung.

Der erste Schritt besteht darin, dass die erste Person A (= Träger des Identifikations-Codes 14) den Gegenstand G, beispielsweise einen Schlüssel oder dergleichen, an der Annahmestelle 10 zur Aufbewahrung übergibt.

Bei Abgabe des Gegenstands G an einer Annahmestelle 10 wird, wie in Figur 1 B dargestellt, ein Annahme- und Ausgabe-Code 12 erzeugt, den die Annahmestelle 10 gleichzeitig dem Gegenstand G zuordnet.

In diesem Zusammenhang kann der Gegenstand G in einem Aufbewahrungsbehältnis 28, zum Beispiel in einem versiegelbaren, im wesentlichen transparenten Etui (sogenanntes "safety pack"), aufbewahrt werden. Dieses Aufbewahrungsbehältnis 28 schützt den Gegenstand G vor unbefugter Duplizierung.

Um eine systematische und platzsparende Einlagerung des Gegenstands G zu gewährleisten, ist der Annahme- und Ausgabe-Code 12 dem Aufbewahrungsbehältnis 28 und damit dem Gegenstand G zugeordnet, indem der Annahme- und Ausgabe-Code 12 bereits auf das Aufbewahrungsbehältnis 28 aufgedruckt ist.

Dieser Annahme- und Ausgabe-Code 12 besteht vorzugsweise aus einer Zahlenkombination beliebiger Länge oder aus einer Buchstabenkombination beliebiger Länge oder aus einer alphanumerischen Kombination beliebiger Länge; beispielsweise lautet dieser Annahme- und Ausgabe-Code 12
- als Zahlenkombination "123456" oder
- als Buchstabenkombination "XYZABC" oder
- als alphanumerische Kombination "XYZ4711 ".

Als Annahme- und Ausgabe-Code 12 kann zudem auch ein Einlieferungsdatum, beispielsweise "12.05.2002", oder eine fortlaufende Nummer, beispielsweise "25647", einer Registrierkasse oder dergleichen verwendet werden.

Gleichzeitig füllt die erste Person A ein (Anmelde-)Formular mit einer kurzen Anleitung aus, das den Annahme- und Ausgabe-Code 12 enthält, und setzt den Identifikations-Code 14 ein. Dieses Formular wird, beispielsweise auf dem Postweg, direkt der Zentrale 16 zugeleitet, ohne dass die Annahmestelle 10 hiervon Kenntnis nehmen kann.

Alternativ hierzu gibt die erste Person A in der Annahmestelle 10 anonym ihren Identifikations-Code 14 in ein Eingabegerät ein, auch per Internet; vorzugsweise besteht dieser Identifikations-Code 14 aus dem persönlichen Code Cₚ und aus den persönlichen Daten Dₚ, wobei der persönliche Code Cₚ und die persönlichen Daten Dₚ gemeinsam mit dem Annahme- und Ausgabe-Code 12 durch ein Übertragungsmittel 22 an die Zentrale 16 weitergeleitet werden, ohne dass die Annahmestelle 10 den Identifikations-Code 14 erfährt.

Als Übertragungsmittel 22 wird ein Bote, ein Kurier, die Post oder dergleichen eingesetzt. Es ist auch denkbar, dass die erste Person A die Informationen online über eine sichere Datenleitung mit Terminals oder mit dergleichen per Internet an die Zentrale 16 bzw. an die Kommunikationsanlage 18 der Zentrale 16 übermittelt (= Vorgang der Anmeldung der ersten Person A bei der Sicherheitszentrale 16).

In der Zentrale 16 werden die Daten angenommen, ausgelesen und völlig anonym sowie absolut sicher gespeichert. Der Eingang des Annahme- und Ausgabe-Codes 12 sowie des Identifikations-Codes 14 bei der Zentrale 16 und damit die Aktivierung des Sicherheitssystems werden der ersten Person A sodann per E[lectronic]Mail oder per Post bestätigt.

Ist die Annahmestelle 10 am gleichen Ort wie die Aufbewahrungs- und Ausgabestelle 10' (in Figur 1 B aus Gründen der Übersichtlichkeit der Darstellung nicht explizit gezeigt), so ist der Gegenstand G nur am gleichen Ort der Aufbewahrungs- und Ausgabestelle 10' zu übergeben. Die notwendige Information des Annahme- und Ausgabe-Codes 12 ist an den Gegenstand G gekoppelt und liegt damit auch in der Aufbewahrungs- und Ausgabestelle 10' vor.

Ist beispielsweise im Falle einer Tankstelle als Annahmestelle 10 diese nicht gleich der Aufbewahrungs- und Ausgabestelle 10', so besitzen zunächst nur die erste Person A sowie die Annahmestelle 10 den Annahme- und Ausgabe-Code 12. Im weiteren erfolgt dann der Übergang zur Aufbewahrungs- und Ausgabestelle 10', wo dann ebenfalls der Annahme- und Ausgabe-Code 12 vorliegt. Der Übergang des Gegenstands G ist in Figur 1 C dargestellt.

Der durch die Figuren 1A bis 1C dargestellte erste Schritt des Verfahrens ist damit abgeschlossen. Der Gegenstand G ist in der Aufbewahrungs- und Ausgabestelle 10' zur Aufbewahrung unter dem Annahme- und Ausgabe-Code 12 deponiert.

Figur 1C zeigt, dass der Identifikations-Code 14, vorzugsweise der persönliche Code Cₚ und die persönlichen Daten Dₚ, nur bei der ersten Person A und in der Zentrale 16 vorliegen.

Der Gegenstand 16 ist jetzt nur noch über die Zentrale 16 durch Angabe des Identifikations-Codes 14 identifizierbar.

Figur 1D zeigt als Blockschaltbild den Beginn des zweiten Verfahrensschrittes. Die erste Person A kann bei Bedarf zu jeder Zeit über die Kommunikationsanlage 18 mittels Übermittlung des Identifikations-Codes 14 bei der Zentrale 16 die Freigabe des Gegenstands G erwirken.

Über zum Beispiel ein Telekommunikationssystem 20 ist eine fernmündliche oder telephonische Verbindung mit der Kommunikationsanlage 18 möglich, die beispielsweise aus einer Datenbank einer datenverarbeitenden Anlage (= Computer) gebildet wird. Die Verbindung kann vorzugsweise auch durch einen Zugang über ein rechnergestütztes System, insbesondere per Internet, hergestellt werden.

Die Datenbank verwaltet den Annahme- und Ausgabe-Code 12, den Identifikations-Code 14, die persönlichen Daten Dₚ sowie den persönlichen Code Cₚ und ist vorzugsweise durch einen weiteren Zugangscode eines Sicherheitssystems gesichert, der der ersten Person A vorher vorzugsweise in einem Bestätigungsschreiben mitgeteilt worden ist (der Zugangscode des Sicherheitssystems ist in den Figuren 1A bis 1H aus Gründen der Übersichtlichkeit der Darstellung nicht explizit gezeigt). Der Zentrale 16 ist nicht bekannt, wo und wie der Gegenstand G im Depot verwahrt wird.

Gibt beispielsweise die erste Person A als Identifikations-Code 14 den persönlichen Code Cₚ "XYZ4711" an, so vergleicht die Zentrale 16 diesen persönlichen Code Cₚ mit dem der Zentrale 16 vorliegenden persönlichen Code Cₚ "XYZ4711".

Stimmen diese beiden Codes nun überein, so gibt die Zentrale 16 den Gegenstand G bei der Ausgabestelle 10' frei, wozu zuvor in der Zentrale 16 der von der ersten Person A als Identifikations-Code 14 übermittelte persönliche Code Cₚ "XYZ4711" in die Datenbank (= in den Computer) eingegeben werden kann und über den Identifikations-Code 14 automatisch dem entsprechenden Annahme- und Ausgabe-Code 12 zugeordnet werden kann.

Als Vergleichskriterium kann auch eine andere einzelne Information verwendet werden, das heißt es ist nicht zwingend, den persönlichen Code Cₚ als Vergleichskriterium auszuwählen; beispielsweise ist auch eine Kreditkartennummer, die zu den persönlichen Daten Dₚ gehört, als Vergleichskriterium heranziehbar.

Die Übereinstimmung des persönlichen Codes Cₚ, den die erste Person A angibt und der mit dem in der Zentrale 16 vorgemerkten persönlichen Code Cₚ verglichen wird, ist eine Mindestanforderung, deren Erfüllung zur Freigabe des Gegenstands G erforderlich ist. Da der Zentrale 16 weitere Informationen vorliegen, ist es möglich, alle Daten als Vergleichskriterien zu benutzen, also sowohl den persönlichen Code Cₚ als auch den Annahme- und Ausgabe-Code 12 und die persönlichen Daten Dₚ.

Nur wenn alle Vergleichskriterien überstimmen, erfolgt eine Freigabe des Gegenstands G, so dass der Gegenstand G bei der entsprechenden Aufbewahrungs- und Ausgabestelle 10' abholbereit zurechtgelegt werden kann, nachdem die Zentrale 16 den entsprechenden Aufbewahrungs- und Ausgabestelle 10' benachrichtigt hat.

Die Freigabe oder Freischaltung des Gegenstands G, während derer unter anderem der Gegenstand G dem zuvor versiegelten Aufbewahrungsbehältnis 28 entnommen wird, erfolgt in einem dritten Verfahrensschritt, der in Figur 1E anhand eines Blockschaltbilds dargestellt ist.

Durch die vorhandene, bereits beschriebene Kommunikationsanlage 18 wird jetzt der Ausgabe-Code 12 über beispielsweise das Telekommunikationssystem 20 der Aufbewahrungs- und Ausgabestelle 10' übermittelt.

Besteht der Identifikations-Code 14 jedoch nur aus dem Anteil des persönlichen Codes Cₚ, so ist nur eine Freigabe und Ausgabe des Gegenstands G an der Aufbewahrungs- und Ausgabestelle 10' möglich, denn die Adresse der ersten Person A ist in diesem Falle nicht bekannt (diese Möglichkeit ist in den Figuren 1A bis 1H aus Gründen der Übersichtlichkeit der Darstellung nicht explizit gezeigt).

In diesem Falle wird die erste Person A - oder eine bevollmächtigte Person - mit dem von der Zentrale 16 übermittelten Identifikations-Code 14, das heißt in diesem Falle nur mit dem persönlichen Code Cₚ in der Aufbewahrungs- und Ausgabestelle 10' ihren Gegenstand G erhalten.

Es ist auch möglich, dass die erste Person - oder eine bevollmächtigte Person - ein anderes mit der Zentrale 16 vereinbartes Codewort angibt (vgl. hierzu auch nachstehend dritte alternative Möglichkeit gemäß Figur 1H) oder der Zentrale 16 über eine geeignete Eingabestation mittels der Kommunikationsanlage 18 zuleitet. Es ist auch möglich, anstelle eines Codewortes eine persönliche Identifikationsnummer (P[ersonal]I[dentification]N[umber]) einzugeben.

Eine Lieferung (Ausgabe) des Gegenstands G an die erste Person A ist über drei weitere Alternativen (vgl. nachstehend Figur 1F: erste Alternative; Figur 1G: zweite Alternative; Figur 1H: dritte Alternative) möglich.

Die erste Alternative besteht darin, dass der durch die Person A an die Zentrale 16 übermittelte Identifikations-Code 14 aus dem persönlichen Code Cₚ und aus den persönlichen Daten Dₚ, insbesondere aus der Adresse der ersten Person A, besteht. Dann ist sowohl eine Ausgabe in der Aufbewahrungs- und Ausgabestelle 10' als auch eine Auslieferung an die erste Person A an deren Adresse, die Inhalt der persönlichen Daten Dₚ ist, möglich.

Diese erste alternative Möglichkeit ist in einem vierten Verfahrensschritt in Figur 1F in einem weiterführenden Blockschaltbild dargestellt.

Da der durch das Telekommunikationssystem 20 übermittelte Annahme- und Ausgabe-Code 12 mit dem hinterlegten Annahme- und Ausgabe- Code 12 übereinstimmt, wird der Gegenstand G in der Aufbewahrungs- und Ausgabestelle 10' freigegeben.

Der Gegenstand G wird durch eine zweite Person B, die den persönlichen Code Cₚ mitgeteilt bekommt, an die bekannte Adresse geliefert. Bei der Auslieferung werden die persönlichen Daten Dₚ, beispielsweise durch Zeigen eines Personalausweises oder durch andere Nachweismittel, und der persönliche Code Cₚ mit der Person A verglichen. Stimmen die Daten überein, wird der Gegenstand G an die erste Person A übergeben.

Wie in Figur 1G in einem weiteren Blockschaltbild gezeigt ist, besteht die zweite alternative Möglichkeit darin, dass der durch die Person A an die Zentrale 16 übermittelte Identifikations-Code 14 vorzugsweise aus dem persönlichen Code Cₚ und aus den persönlichen Daten Dₚ, insbesondere aus der Adresse der ersten Person A und aus einer weiteren Zusatzinformation Zi, besteht. Diese Zusatzinformation Zi ist beispielsweise ein vorgebbarer momentaner Aufenthaltsort 24 der ersten Person A, der von der hinterlegten Adresse als Bestandteil der persönlichen Daten Dₚ der ersten Person A abweicht.

Mittels dieser Zusatzinformation Zi verbindet bzw. wünscht die erste Person A die Lieferung des Gegenstands G an den genannten momentanen Aufenthaltsort 24 der Person A.

Die Zentrale 16 übermittelt wiederum über die Kommunikationsanlage 18 mittels des Telekommunikationssystems 20 die hinterlegten Daten (= Annahme- und Ausgabe-Code 12 sowie Zusatzinformation Zi) an die Aufbewahrungs- und Ausgabestelle 10'.

Da der durch das Telekommunikationssystem 20 übermittelte Annahme- und Ausgabe-Code 12 mit dem hinterlegten Annahme- und Ausgabe- Code 12 übereinstimmt, wird der Gegenstand in der Annahme- und Ausgabestelle 10' freigegeben.

Zusätzlich liegt jetzt die Information Zi vor, die in den bisherigen übermittelten Daten nicht enthalten war. Dieses Merkmal bedeutet für die Aufbewahrungs- und Ausgabestelle 10', dass der Gegenstand G durch die zweite Person B an die die Zusatzinformation Zi beispielsweise enthaltende Adresse mit dem vorgebbaren Aufenthaltsort 24 der ersten Person A ausgeliefert werden soll.

Der Gegenstand G wird durch die zweite Person B, die den persönlichen Code Cₚ mitgeteilt bekommt, an den in der Zusatzinformation Zi angegebenen vorgegebenen Aufenthaltsort 24 geliefert. Wie in der ersten Alternative gemäß Figur 1F werden bei Auslieferung am Aufenthaltsort 24 die persönlichen Daten Dₚ, beispielsweise durch Zeigen eines Personalausweises oder durch andere Nachweismittel des persönlichen Codes Cₚ, mit der Person A verglichen. Stimmen die zu vergleichenden Daten überein, wird der Gegenstand G an die erste Person A, diesmal am Aufenthaltsort 24, übergeben.

Der Gegenstand G wird nur der Person A übergeben und nicht wieder mitgenommen, so dass eine neue Annahme des Gegenstands G erforderlich ist. Würde die zweite Person B den gleichen Gegenstand G wieder mitnehmen, ist neben der Zentrale 16 und der ersten Person A auch in Zukunft mindestens die zweite Person B Träger der Informationen Cₚ (= persönlicher Code) und Dₚ (= persönliche Daten) in Verbindung mit dem Annahme- und Ausgabe-Code 12 oder in Verbindung mit der Zusatzinformation Zi.

Die Sicherung des Gegenstands G in der Aufbewahrungs- und Ausgabestelle 10' ist dann nicht mehr gewährleistet. Die erste Person A hat den Gegenstand G wieder neu zur Annahmestelle 10 bringen. Der Zentrale 16 wird dann ein neuer Annahme- und Ausgabecode 12 übermittelt.

Wie in Figur 1 H in einem weiteren Blockschaltbild gezeigt ist, besteht die dritte alternative Möglichkeit, die ansonsten weitgehend der zweiten alternativen Möglichkeit gemäß Figur 1 G nachempfunden ist, auf deren Ausgestaltungen, Merkmale und Vorteile zur Vermeidung überflüssiger Wiederholungen explizit Bezug genommen wird, darin, dass zusätzlich zur Übermittlung des Annahme- und Ausgabe-Codes 12 von der Zentrale 16 an die Aufbewahrungs- und Ausgabestelle 10' ein Übergabecode 26, zum Beispiel ein Übergabepasswort, von der Zentrale 16 an die erste Person A sowie an die Aufbewahrungs- und Ausgabestelle 10' übermittelt wird.

Die Übermittlung dieses Übergabecodes 26 kann zeitlich vor, während oder nach der Übermittlung des Annahme- und Ausgabe-Codes 12 erfolgen, zum Beispiel über die Kommunikationsanlage 18.

Dieser Übergabecode 26, der in erster Linie der Kontrolle bei der Aushändigung bzw. Übergabe des Gegenstands G in der Aufbewahrungs- und Ausgabestelle 10' dient, kann bei der Freischaltung von der Zentrale 16 vergeben und sowohl der ersten Person A als auch der Aufbewahrungs- und Ausgabestelle 10' benannt werden.

Durch die Vergabe dieses auch als Übergabepasswort oder "zweites Passwort" 26 bezeichenbares Übergabecodes an die erste Person A kann diese erste Person A ihren auch als "erstes Passwort" bezeichenbaren Identifikations-Code 14, der ausschließlich der ersten Person A bekannt ist, über mehrere Freischaltungen hinweg behalten.

Abschließend sei zusammenfassend verdeutlicht, dass die einzelnen Bestandteile des Verfahrens gemäß der vorliegenden Erfindung (vgl. Figuren 1A bis 1H) wie auch des Systems 100 gemäß der vorliegenden Erfindung (vgl. Figuren 1A bis 1H) einen ausgesprochen hohen Schutz vor jeglichem Missbrauch gewährleisten:
(i) In den Annahmestellen 10 bzw. in den Aufbewahrungs- und Ausgabestellen 10' lagern aus Sicht dritter Personen und/oder unbefugter Personen "wertlose" Gegenstände G, denn die Zuordnung einer Adresse oder einer Person zu einem bestimmten Gegenstand G ist schon allein durch die erfindungsgemäße Separierung des Annahme- und Ausgabe-Codes 12 vom Identifikations-Code 14 vollkommen unmöglich; der Annahmestelle 10 bzw. Aufbewahrungs- und Ausgabestelle 10' ist lediglich der Annahme- und Ausgabe-Code 12 bekannt.
(ii) Die erste Person A teilt der Sicherheitszentrale 16 beim Anmeldevorgang bzw. beim Registrierungsprozeß nicht mit, in welcher Annahmestelle 10 bzw. Aufbewahrungs- und Ausgabestelle 10' der Gegenstand G hinterlegt ist; die erste Person A nennt den Sitz der entsprechenden Annahmestelle 10 bzw. Aufbewahrungs- und Ausgabestelle 10' erst dann, wenn die Freigabe bzw. Freischaltung des Gegenstands G erwünscht ist.
(iii) Indem die Datenbank, insbesondere die Verwaltungssoftware, der (Sicherheits-)Zentrale 16 mit einem entsprechenden Zugriffsschutz ausgestattet ist, kann die Zuordnung des Annahme- und Ausgabe-Codes 12 sowie der Adresse der ersten Person A zu einer entsprechenden Annahmestelle 10 bzw. Aufbewahrungs- und Ausgabestelle 10' ausschließlich bei der von der ersten Person A initiierten Freigabe bzw. Freischaltung erfolgen; so ist es zum Beispiel in der Zentrale 16 nicht möglich, durch alleinige Eingabe des Annahme- und Ausgabe-Codes 12 die Adresse der ersten Person A zu ermitteln.
(iv) Die erfindungsgemäß strikte Trennung von in der Zentrale 16 erfolgender Administration und in der Annahmestelle 10 bzw. Aufbewahrungs- und Ausgabestelle 10' erfolgender Depotierung des Gegenstands G gewährleistet für die erste Person A absolute Anonymität sowie Diskretion und ein ausgesprochen hohes Maß an Sicherheit; keine der am Gesamtprozeß beteiligten Personen hat die Möglichkeit, ohne Einwilligung der ersten Person A auf den Gegenstand G zuzugreifen.

### Bezugszeichenliste

- 100: System
- 10: Annahmestelle
- 10': Aufbewahrungs- und Ausgabestelle
- 12: Annahme- und Ausgabe-Code
- 14: Identifikations-Code
- 16: Zentrale, insbesondere Sicherheitszentrale
- 18: Kommunikationsanlage
- 20: Telekommunikationssystem
- 22: Übertragungsmittel
- 24: Aufenthaltsort, insbesondere vorgebbarer Aufenthaltsort
- 26: Übergabecode, insbesondere Übergabepasswort
- 28: Aufbewahrungsbehältnis
- A: erste Person
- B: zweite Person
- Cₚ: persönlicher Code
- Dₚ: persönlichen Daten
- G: Gegenstand
- Zi: Zusatzinformation

## Patentansprüche

1. Verfahren zur Annahme, Aufbewahrung, Ausgabe und Überbringung mindestens eines Gegenstands (G), insbesondere mindestens eines Schlüssels, aufweisend die folgenden Verfahrensschritte:
- mindestens eine erste Person (A) gibt den Gegenstand (G) in mindestens einer Annahmestelle (10) unter Registrierung mindestens eines von der Annahmestelle (10) ausgegebenen und dem Gegenstand (G) zugeordneten Annahme- und Ausgabe-Codes (12) ab;
- die erste Person (A) gibt gegenüber mindestens einer Zentrale (16) mindestens einen Identifikations-Code (14), gegebenenfalls gleichzeitig mit dem Abgeben des Gegenstands (G), ab,
- wobei der Gegenstand (G) von mindestens einer Aufbewahrungs- und Ausgabestelle (10') übernommen und aufbewahrt wird,
- wobei der Annahme- und Ausgabe-Code (12) und der Identifikations-Code (14) an die Zentrale (16) durch mindestens ein Übertragungsmittel (22) zugeführt werden können und
- wobei der Annahme- und Ausgabe-Code (12) und der Identifikations-Code (14) in der Zentrale (16) zusammengeführt werden;
- die Freigabe des Gegenstands (G) durch die Zentrale (16) erfolgt nach Kontaktaufnahme der ersten Person (A) über mindestens eine Kommunikationsanlage (18) nur dann, wenn der zu nennende Identifikations-Code (14) mit dem der Zentrale (16) zugeführten Identifikations-Code (14) bei mindestens einem Vergleich übereinstimmt;
- daraufhin wird der Annahme- und Ausgabe-Code (12) von der Zentrale (16) über die Kommunikationsanlage (18) an die Aufbewahrungs- und Ausgabestelle (10') übermittelt.

2. Verfahren gemäß Anspruch 1, **dadurch gekennzeichnet, dass** zusätzlich zur, insbesondere vor, während oder nach der, Übermittlung des Annahme- und Ausgabe-Codes (12) von der Zentrale (16) an die Aufbewahrungs- und Ausgabestelle (10') mindestens ein Übergabecode (26), insbesondere mindestens ein Übergabepasswort, von der Zentrale (16), zum Beispiel über die Kommunikationsanlage (18), an die erste Person (A) sowie an die Aufbewahrungs- und Ausgabestelle (10') übermittelt wird.

3. Verfahren gemäß Anspruch 1 oder 2, **dadurch gekennzeichnet,**
- **dass** der Gegenstand (G) in mindestens einem Aufbewahrungsbehältnis (28), insbesondere in mindestens einem versiegelbaren Etui, aufbewahrt wird,
- wobei der Annahme- und Ausgabe-Code (12) dem Aufbewahrungsbehältnis (28) zugeordnet, insbesondere auf das Aufbewahrungsbehältnis (28) aufgedruckt, werden kann.

4. Verfahren gemäß mindestens einem der Ansprüche 1 bis 3, **dadurch gekennzeichnet, dass** der Identifikations-Code (14)
- aus persönlichen Daten (Dₚ) und/oder
- aus mindestens einem persönlichen Code (Cₚ) gebildet wird.

5. Verfahren gemäß Anspruch 4, **dadurch gekennzeichnet,**
- **dass** der Gegenstand (G) in der Aufbewahrungs- und Ausgabestelle (10') an die erste Person (A) nach Nennung des persönlichen Codes (Cₚ) durch die erste Person (A) ausgegeben wird und/oder
- **dass**, wenn die persönlichen Daten (Dₚ) oder mindestens eine Zusatzinformation (Zi) an die Aufbewahrungs- und Ausgabestelle (10') übermittelt werden, der Gegenstand (G) durch mindestens eine zweite Person (B) an die erste Person (A) an die in den persönlichen Daten (Dₚ) übermittelte Adresse oder an mindestens einen in der Zusatzinformation (Zi) übermittelten Aufenthaltsort (24) unter Nennung des persönlichen Codes (Cₚ) und/oder unter Nachweis der persönlichen Daten (Dₚ) ausgegeben und/oder ausgeliefert wird.

6. Verfahren gemäß mindestens einem der Ansprüche 1 bis 5, **dadurch gekennzeichnet, dass** die Zentrale (16) über mindestens einen Zugangscode und über den Identifikations-Code (14) direkt die Ausgabe des Gegenstands (G) freigibt.

7. System (100) zur Annahme, Aufbewahrung, Ausgabe und Überbringung mindestens eines Gegenstands (G), insbesondere mindestens eines Schlüssels, aufweisend
- mindestens eine Annahmestelle (10), in der der Gegenstand (G) von mindestens einer ersten Person (A) abgebbar ist;
- mindestens einen von der Annahmestelle (10) ausgegebenen und dem Gegenstand (G) zugeordneten Annahme- und Ausgabe-Code (12), der beim Abgeben des Gegenstands (G) registrierbar ist;
- mindestens einen Identifikations-Code (14), der von der ersten Person (A) gegenüber mindestens einer Zentrale (16), gegebenenfalls gleichzeitig mit dem Abgeben des Gegenstands (G), abgebbar ist;
- mindestens ein Übertragungsmittel (22), durch das der Annahme- und Ausgabe-Code (12) und der Identifikations-Code (14) an die Zentrale (16) zuführbar sind, wobei der Annahme- und Ausgabe- Code (12) und der Identifikations-Code (14) in der Zentrale (16) zusammenführbar sind;
- mindestens eine Aufbewahrungs- und Ausgabestelle (10'), von der der Gegenstand (G) übernehmbar und aufbewahrbar ist;
- mindestens eine Kommunikationsanlage (18), über die die erste Person (A) nach Kontaktaufnahme die Freigabe des Gegenstands (G) durch die Zentrale (16) nur dann bewirken kann, wenn der zu nennende Identifikations-Code (14) mit dem der Zentrale (16) zugeführten Identifikations-Code (14) bei mindestens einem Vergleich übereinstimmt, woraufhin der Annahme- und Ausgabe-Code (12) von der Zentrale (16) über die Kommunikationsanlage (18) an die Aufbewahrungs- und Ausgabestelle (10') übermittelbar ist.

8. System gemäß Anspruch 7, **gekennzeichnet durch** mindestens ein Übergabecode (26), insbesondere mindestens ein Übergabepasswort, das zusätzlich zur Übermittlung des Annahme- und Ausgabe-Codes (12) von der Zentrale (16) an die Aufbewahrungs- und Ausgabestelle (10') von der Zentrale (16) an die erste Person (A) sowie an die Aufbewahrungs- und Ausgabestelle (10') übermittelbar ist.

9. System gemäß Anspruch 7 oder 8, **gekennzeichnet durch** mindestens ein Aufbewahrungsbehältnis (28), insbesondere **durch** mindestens ein versiegelbares Etui,
- in dem der Gegenstand (G) aufbewahrbar ist und
- dem der Annahme- und Ausgabe-Code (12) zuordbar, insbesondere auf das der Annahme- und Ausgabe-Code (12) aufdruckbar oder aufgedruckt, ist.

10. Verwendung eines Verfahrens gemäß mindestens einem der Ansprüche 1 bis 6 und/oder mindestens eines Systems (100) gemäß mindestens einem der Ansprüche 7 bis 9 beim Annehmen, Aufbewahren, Ausgeben und Überbringen mindestens eines Gegenstands (G), insbesondere mindestens eines Schlüssels.
